# FASCICULE DE BREVET EUROPEEN

(11) **EP 0 742 426 B1**
(45) Date de publication et mention de la délivrance du brevet: **16.08.2001**
(21) Numéro de dépôt: 96400978.1
(22) Date de dépôt: 07.05.1996
(51) Int. Cl.: G01G 3/14

(54) **Capteur de poids autoporteur et appareil de pesage comportant de tels capteurs**
Selbsttragender Gewichtsensor und damit ausgestattete Waage
Self-supporting weight sensor and weighing apparatus provided with such sensors

(30) Priorité: 09.05.1995 FR 9505478
(43) Date de publication de la demande: 13.11.1996
(73) Titulaire: SEB S.A., 69130 Ecully (FR)
(72) Inventeur: Anthoine-Milhomme, Didier, 73410 Albens (FR); Sarrazin, Michel, 74150 Massingy (FR); Pitaud, Bernard, 74000 Annecy (FR)
(74) Mandataire: Keib, Gérard

(56) Documents cités:
- EP-A- 0 050 708
- EP-A- 0 141 710
- FR-A- 2 532 746
- US-A- 4 993 506

## Description

La présente invention concerne un capteur de poids autoporteur, notamment pour appareil de pesage.

L'invention concerne également un appareil de pesage comportant un ou plusieurs capteurs de poids.

On connaît des appareils de pesage, tels que pèse-personnes comprenant une surface destinée à recevoir le poids à peser, un socle destiné à reposer sur une surface plane et un capteur portant des jauges d'extensométrie.

Un tel appareil de pesage a été décrit notamment dans les brevets européens 141 710 et 317 429 au nom de la demanderesse.

Dans ces appareils connus, un capteur unique en forme de barreau métallique est disposé entre le plateau et le socle. Le barreau subit essentiellement un effort de flexion sous l'effet du poids à peser appliqué sur le plateau, mais subit également des moments parasites et en particulier une torsion due au fait que le point d'application du poids à peser peut être espacé du capteur.

Les jauges sont reliées à un circuit électronique pour convertir les déformations subies par les jauges en signaux électriques et transformer ces derniers en valeurs numériques correspondant au poids mesuré.

Dans le cas d'un appareil comportant plusieurs capteurs associés à un même plateau de pesée, lorsqu'un poids est déposé sur ce plateau, le barreau subit une déflexion verticale qui nécessite une libération horizontale de contrainte afin de prévenir les défauts de retour à zéro ou les erreurs d'hystérésis.

Cette libération de contrainte est généralement assurée par des systèmes d'articulation par couteaux, silentblocs ou rotules.

Dans ces appareils, les extrémités des barreaux portant les jauges d'extensométrie doivent être parfaitement encastrées par rapport au plateau et au socle, de façon que la charge appliquée sur le plateau engendre une force qui soit bien prise en compte par le barreau.

De tels appareils ont été décrits notamment dans les brevets US 3 512 595, FR 2 356 913 et GB 1 373 992.

On connaît également selon le brevet EP 0 519 818 un appareil de pesage monobloc dans lequel le plateau, le barreau et le socle sont réalisés d'une seule pièce.

On connaît selon le brevet américain 4 993 506, un capteur de poids, notamment pour appareil de pesage réalisé d'une seule pièce en forme de bloc plat, comprenant un corps d'épreuve en forme de barreau portant des jauges d'extensométrie, ledit barreau subissant une flexion sous l'effet du poids à mesurer. Les extrémités opposées du barreau sont reliées chacune à une surface d'appui en forme de U destinée à être soumise à une force de sens opposé à une force s'appliquant sur l'autre surface d'appui.

Le brevet ci-dessus décrit également un appareil de pesage comprenant un plateau reposant sur quatre capteurs du type ci-dessus. L'une des deux surfaces d'appui en U de chaque capteur est fixée au plateau par des vis.

Etant donné que les deux surfaces en U sont situées de part et d'autre du point milieu du barreau, lorsqu'une charge est appliquée sur l'appareil de pesage, les fixations par vis du capteur, sont fortement sollicitées.

De ce fait, ces fixations doivent être rigides, ce qui entraîne une contrainte de fabrication.

Par ailleurs, du fait des fixations rigides ci-dessus, les capteurs sont rendus dépendants les uns des autres par le plateau. Cette dépendance engendre des problèmes dus à l'hystérésis et aux défauts de retour à zéro.

Le but de la présente invention est de remédier aux inconvénients ci-dessus, en créant un capteur autoporteur, simple à fabriquer, permettant de faciliter la fabrication des appareils de pesage et d'améliorer la qualité de ceux-ci.

L'invention vise ainsi un capteur de poids, notamment pour appareil de pesage, réalisé d'une seule pièce en forme de bloc plat, comprenant un corps d'épreuve en forme de barreau portant des jauges d'extensométrie, ledit barreau subissant une flexion sous l'effet du poids à mesurer, les extrémités opposées dudit barreau étant reliées chacune à une surface d'appui destinée à être soumise à une force de sens opposé à une force s'appliquant sur l'autre surface d'appui.

Suivant l'invention, ledit capteur est caractérisé en ce que l'une des surfaces d'appui est portée par un cadre à l'intérieur duquel s'étend ledit barreau, l'une des extrémités dudit barreau étant reliée audit cadre, son autre extrémité portant l'autre surface d'appui, cette dernière étant libre par rapport au cadre et entièrement comprise à l'intérieur de ce dernier.

Le capteur selon l'invention se présente ainsi sous la forme d'un bloc plat intégrant à la fois le corps d'épreuve c'est-à-dire le barreau et deux surfaces d'appui opposées l'une à l'autre, l'une d'elle étant destinée à être soumise au poids à mesurer, l'autre, à sa force de réaction.

Il est par conséquent autoporteur, c'est-à-dire que ses surfaces d'appui lui permettent d'être toujours par lui-même en équilibre mécanique.

Grâce à sa forme de bloc plat un tel capteur peut être facilement intégré dans un appareil de mesure, tel qu'un appareil de pesage, et résout par conséquent les problèmes dus à l'encastrement du barreau relativement au socle et au plateau d'un appareil de pesage.

En effet, du fait que l'une des surfaces d'appui est totalement inscrite dans l'autre surface d'appui portée par le barreau, lorsque les deux surfaces d'appui sont sollicitées, le capteur reste en équilibre. De ce fait, le plateau d'un appareil de pesage peut être relié à l'une des surfaces d'appui du capteur par des liaisons mécaniques non rigides, relativement lâches ou souples, puisqu'elles ne sont pas sollicitées par le poids à mesurer.

Selon une version avantageuse de l'invention, le cadre est de forme rectangulaire.

De préférence, le barreau s'étend suivant une direction de symétrie du cadre.

Selon une version particulière de l'invention, la surface d'appui portée par ladite extrémité du barreau comprend deux tronçons s'étendant à l'intérieur du cadre de façon symétrique par rapport au barreau.

Selon une version préférée de l'invention, les jauges d'extensométrie sont disposées sur un support en céramique collé sur le barreau ainsi que sur une partie dudit cadre, adjacente à l'une des extrémités du barreau et sur une partie de ladite surface d'appui adjacente à ladite autre extrémité du barreau.

Cette disposition permet d'améliorer le fonctionnement du capteur.

L'invention vise également un appareil de pesage comprenant au moins un capteur de poids conforme à l'invention.

De préférence, cet appareil de pesage comprend au moins trois capteurs de poids conformes à l'invention, disposés sous un plateau commun, les jauges d'extensométrie portées par les barreaux étant reliées à un circuit électronique de mesure commun.

Un tel appareil de pesage remédie aux inconvénients des appareils connus ne possédant qu'un seul capteur, et dans lesquels le barreau unique subit des moments parasites, d'une part, et les flèches importantes, d'autre part.

Selon une version préférée de l'appareil de pesage, le plateau est en contact avec l'une des faces des capteurs par des organes qui prennent appui sur la surface d'appui portée par ladite autre extrémité du barreau en laissant libre le cadre.

Selon une autre version, le plateau est en contact avec l'une des faces des capteurs par des organes qui prennent appui sur la surface d'appui constituée par le cadre en laissant libre la surface d'appui portée par ladite autre extrémité du barreau.

Dans les deux versions ci-dessus, les capteurs font partie des pieds de l'appareil de pesage. Le socle de la balance devient ainsi inutile. Les capteurs selon l'invention sous forme de blocs plats permettent ainsi d'obtenir un appareil de pesage simple à construire et permettant d'effectuer des mesures précises étant donné que les erreurs dues aux moments parasites sont minimisées.

D'autres particularités et avantages de l'invention apparaîtront encore dans la description ci-après.

Aux dessins annexés donnés à titre d'exemples non limitatifs:
- la figure 1 est une vue en perspective d'un capteur de poids conforme à l'invention;
- la figure 2 est une vue analogue à la figure 1 montrant une variante de l'invention;
- la figure 3 est une vue en perspective montrant le découpage en tranches de capteurs selon l'invention dans un profilé métallique;
- la figure 4 est une vue en perspective d'un appareil de pesage selon l'invention;
- la figure 5 est une en coupe longitudinale d'un appareil de pesage selon l'invention; et
- la figure 6 est une vue en perspective d'un capteur équipé sur ses deux faces opposées d'organes d'appui destinés à venir en contact respectivement avec le plateau de l'appareil et avec une surface plane.

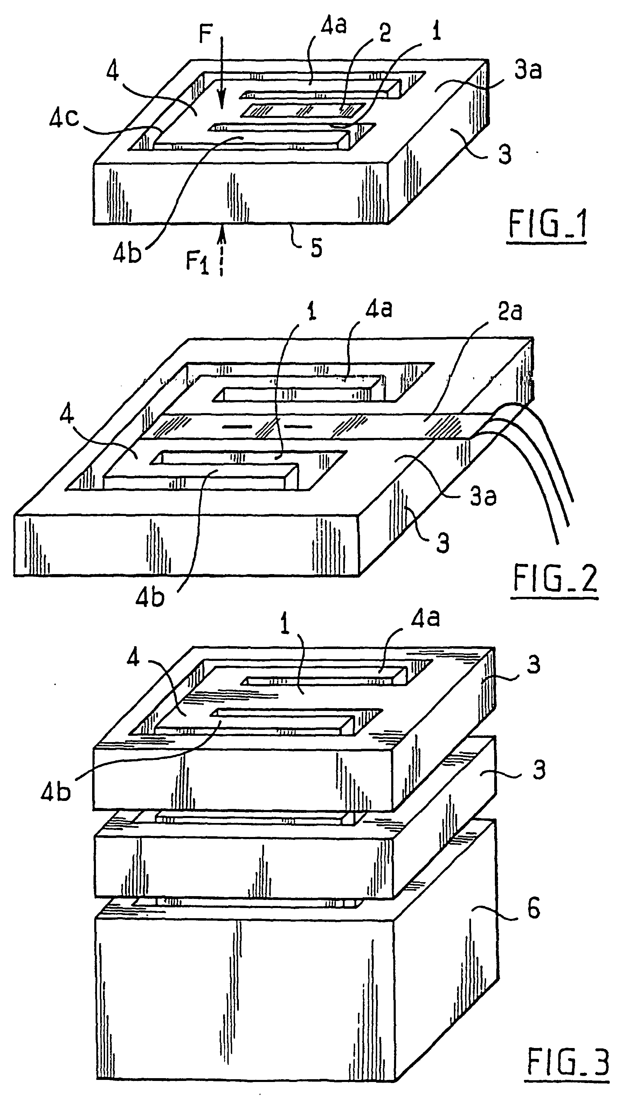

Dans la réalisation des figures 1 et 2, le capteur de poids, notamment pour appareil de pesage, comprend un corps d'épreuve en forme de barreau 1 portant des jauges d'extensométrie 2, 2a, ledit barreau 1 subissant une flexion sous l'effet du poids à mesurer.

Conformément à l'invention, ledit barreau 1 s'étend à l'intérieur du cadre 3. L'une des extrémités du barreau 1 est reliée au cadre 3, son autre extrémité est libre par rapport à ce cadre 3 et comporte une surface d'appui 4 destinée à être soumise à une force F de sens opposé à une force F1 s'appliquant sur une surface d'appui 5 du cadre 3. Par ailleurs, l'ensemble du capteur est réalisé d'une seule pièce dans une matière élastique en forme de bloc plat. La surface d'appui 4 est entièrement comprise à l'intérieur du cadre 3.

Dans les exemples représentés, le cadre 3 est de forme rectangulaire. Toutefois, le cadre 3 pourrait présenter d'autres formes (cercle, trapèze, hexagone, etc...). De plus, le cadre 3 pourrait ne pas être fermé.

Le barreau 1 s'étend suivant une direction de symétrie du cadre 3. La surface d'appui 4 portée par ladite autre extrémité du barreau 1 libre par rapport au cadre 3 comprend deux tronçons 4a, 4b s'étendant à l'intérieur du cadre 3 de préférence de façon symétrique par rapport au barreau 1.

De plus, comme montré par les figures 1 et 2, ladite surface d'appui 4 libre par rapport au cadre 3 comprend un tronçon 4c de préférence perpendiculaire au barreau 1 et parallèle au tronçon 3a du cadre 3 auquel ce barreau est relié. De plus, le tronçon 4c perpendiculaire au barreau 1 est prolongé par les deux tronçons 4a, 4b parallèles s'étendant vers le tronçon 3a du cadre 3. Les deux tronçons 4a, 4b ont une longueur légèrement inférieure à celle du barreau 1.

Dans l'exemple de la figure 2, les jauges d'extensométrie 2a sont disposées sur un support en céramique collé sur toute la longueur du barreau 1 ainsi que sur une partie du cadre 3 adjacente à l'une des extrémités du barreau 1 et sur une partie de la surface d'appui 4 adjacente à l'autre extrémité du barreau 1.

L'expérience a montré que cette disposition permettait d'améliorer le fonctionnement du capteur, surtout pour de petites dimensions.

Le capteur représenté sur les figures 1 et 2 est constitué par un bloc en métal élastique plat d'épaisseur constante qui peut être réalisé d'une manière simple et économique par découpage (voir figure 3) de tranches dans un profilé métallique ayant des caractéristiques mécaniques appropriées. Ce capteur peut aussi être réalisé par frittage de poudre métallique ou bien par découpe de tôle.

Le capteur de structure monobloc qui comprend à la fois le corps d'épreuve et deux surfaces d'appui opposées peut être incorporé d'une manière simple dans un appareil de pesage.

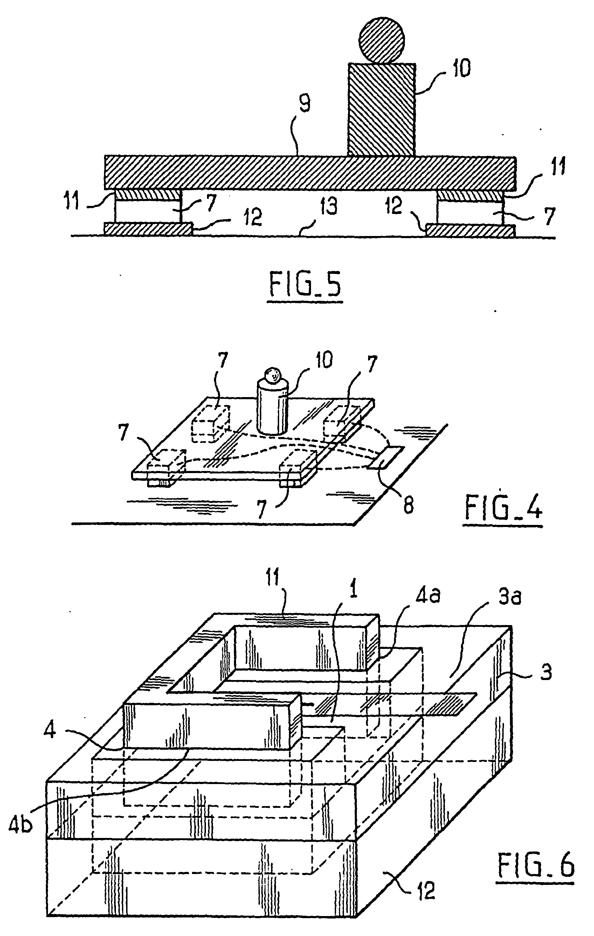

Cet appareil de pesage comprend de préférence au moins trois capteurs de poids conformes à l'invention. L'appareil représenté à la figure 4 comprend quatre capteurs 7. Les jauges d'extensométrie portées par les barreaux de ces capteurs 7 sont reliées à un circuit électronique de mesure 8 commun.

L'appareil de pesage représenté sur les figures 4 et 5 comprend un plateau 9 destiné à recevoir le poids 10 à mesurer.

Comme montré par la figure 5, le plateau 9 est en contact avec l'une des faces des capteurs 7 par des organes 11 sensiblement en forme de U qui prennent appui (voir figure 6) sur la surface d'appui 4 portée par ladite autre extrémité du barreau 1, en laissant libre le cadre 3.

A titre de variante, le plateau 9 pourrait être en contact avec l'une des faces des capteurs 7 par des organes qui prennent appui sur la surface d'appui 5 constituée par le cadre en laissant libre la surface d'appui 4 portée par ladite autre extrémité du barreau 1. Dans ce cas, la disposition des capteurs 7 est inversée par rapport à celle ci-dessus.

Par ailleurs, la surface d'appui 5 des capteurs 7 opposée à celle qui est en contact avec les organes 11 solidaires du plateau 9, est en contact avec un organe 12 destiné à venir en appui sur la surface 13 telle qu'une table sur laquelle est posé l'appareil de pesage.

De ce fait, l'organe 12 forme avec le capteur 7 correspondant, l'un des quatre pieds de l'appareil de pesage. Par conséquent, l'appareil ne nécessite aucun socle.

Bien entendu, comme pour les organes 11, les organes 12 sont en contact avec l'une des surfaces d'appui 4 ou 5 du capteur 7 en laissant libre l'autre surface d'appui, de façon que le barreau 1 puisse fléchir librement.

Il suffit à cet effet que les organes 11 et 12 soient évidés de façon appropriée.

De préférence, les organes 12 sont des blocs en élastomère.

Lors d'une pesée, les liaisons mécaniques existant entre le plateau et les capteurs ne sont pas sollicitées étant donné que grâce à leur structure, les capteurs sont en équilibre mécanique. Ainsi ces liaisons mécaniques peuvent être relativement lâches ou souples et obtenues par exemple par simple clipsage ou encliquetage. De telles liaisons non rigides présentent l'avantage de rendre les capteurs indépendants les uns des autres, ce qui a pour effet de supprimer les inconvénients dus à l'hystérésis et aux défauts de retour à zéro.

L'invention permet ainsi de réaliser un appareil de pesage tel qu'un pèse-personne, à faible coût et remédiant à tous les inconvénients des appareils connus.

A titre d'exemple, les capteurs d'un pèse-personne peuvent être en acier. La longueur du barreau 1 peut être de 15 mm et sa section égale à 10 x 15 mm. L'encombrement du capteur peut être de 38 x 38 mm et son épaisseur totale égale à 5 mm.

## Revendications

1. Capteur de poids, notamment pour appareil de pesage réalisé en forme de bloc plat, comprenant un corps d'épreuve en forme de barreau (1) portant des jauges d'extensométrie (2) ; ledit barreau (1) subissant une flexion sous l'effet du poids à mesurer, les extrémités opposées dudit barreau (1) étant reliées chacune à une surface d'appui (4, 5) destinée à être soumise à une force (F) de sens opposé à une force de réaction (F1) s'appliquant sur l'autre surface d'appui ; caractérisé en ce que l'une (5) des surfaces d'appui est portée par un cadre (3) à l'intérieur duquel s'étend ledit barreau (1), l'une des extrémités dudit barreau (1) étant reliée audit cadre (3), son autre extrémité portant l'autre surface d'appui (4), cette dernière étant libre par rapport au cadre (3) et entièrement comprise à l'intérieur de ce dernier.

2. Capteur de poids conforme à la revendication 1, caractérisé en ce que le cadre (3) est de forme rectangulaire.

3. Capteur de poids conforme à l'une des revendications 1 ou 2, caractérisé en ce que le barreau (1) s'étend suivant une direction de symétrie du cadre (3) .

4. Capteur de poids conforme à l'une des revendications 1 ou 2, caractérisé en ce que ladite surface d'appui (4) libre par rapport au cadre (3) comprend deux tronçons (4a, 4b) s'étendant à l'intérieur du cadre (3) de façon symétrique par rapport au barreau (1) .

5. Capteur de poids conforme à l'une des revendications 2 à 4, caractérisé en ce que ladite surface d'appui (4) libre par rapport au cadre (3) comprend un tronçon (4c) perpendiculaire au barreau (1) et parallèle au tronçon (3a) du cadre (3) auquel ce barreau (1) est relié, ledit tronçon (4c) perpendiculaire au barreau (1) étant prolongé par deux tronçons (4a, 4b) parallèles s'étendant vers ledit tronçon (3a) du cadre (3).

6. Capteur conforme à l'une des revendications 4 ou 5, caractérisé en ce que la longueur des tronçons (4a, 4b) est légèrement inférieure à celle du barreau (1) .

7. Capteur conforme à l'une des revendications 1 à 6, caractérisé en ce que les jauges d'extensométrie (2a) sont disposées sur un support en céramique collé sur le barreau (1) ainsi que sur une partie dudit cadre (3) adjacente à l'une des extrémités du barreau (1) et sur une partie de ladite surface d'appui (4) adjacente à ladite autre extrémité du barreau (1).

8. Capteur de poids conforme à l'une des revendications 1 à 7, caractérisé en ce qu'il est constitué par un bloc en métal plat d'épaisseur constante.

9. Capteur de poids conforme à la revendication 8, caractérisé en ce qu'il est réalisé par découpage d'une tranche dans un profilé métallique (6).

10. Appareil de pesage comprenant au moins un capteur de poids conforme à l'une des revendications 1 à 9.

11. Appareil de pesage comprenant au moins trois capteurs de poids conformes à l'une des revendications 1 à 9, les jauges d'extensométrie portées par les barreaux de ces capteurs étant reliées à un circuit électronique commun (8).

12. Appareil de pesage conforme à la revendication 11, comprenant un plateau (9) destiné à recevoir le poids (10) à mesurer, caractérisé en ce que le plateau (9) est en contact avec l'une des faces des capteurs (7) par des organes (11) qui prennent appui sur la surface d'appui (4) libre par rapport au cadre (3), en laissant libre le cadre (3).

13. Appareil de pesage conforme à la revendication 11, comprenant un plateau (9) destiné à recevoir le poids (10) à mesurer, caractérisé en ce que le plateau (9) est en contact avec l'une des faces des capteurs (7) par des organes (11) qui prennent appui sur la surface d'appui constituée par le cadre (3) en laissant libre la surface d'appui (4) dite libre par rapport au cadre (3).

14. Appareil conforme à l'une des revendications 12 ou 13, caractérisé en ce que la surface d'appui des capteurs (7) opposée à celle qui est en contact avec lesdits organes (11) solidaires du plateau (9), est en contact avec un organe (12) destiné à venir en appui sur la surface (13) sur laquelle est posé l'appareil de pesage, lesdits organes (11) formant avec le capteur (7) correspondant, l'un des pieds de l'appareil de pesage.

15. Appareil de pesage conforme à la revendication 14, caractérisé en ce que ledit organe (12) est en contact avec l'une des surfaces d'appui du capteur (7) en laissant libre l'autre surface d'appui.

16. Appareil de pesage conforme à l'une des revendications 14 ou 15, caractérisé en ce que ledit organe (12) est un bloc en élastomère.

17. Appareil de pesage conforme à l'une des revendications 14 à 16, caractérisé en ce que lesdits organes (11, 12) en contact avec chacune des surfaces d'appui des capteurs sont fixées au plateau (9) et/ou aux capteurs (7) par des moyens de fixation qui ne sont pas sollicités par le poids à mesurer et assurant une indépendance des capteurs.

## Patentansprüche

1. Gewichtssensor, insbesondere für ein Wiegegerät in flacher Bauform, mit einem Prüfkörper in Form eines Stabes (1), der Dehnungsmeßstreifen (2) trägt; wobei sich der Stab (1) unter der Wirkung des zu messenden Gewichts einer Durchfederung unterzieht, wobei die entgegen gesetzten Enden des Stabes (1) jeweils mit einer Anschlagfläche (4, 5) verbunden sind, die einer Kraft (F) ausgesetzt werden kann, die in entgegen gesetzter Richtung zu einer Reaktionskraft (F1) wirkt, mit welcher die andere Anschlagfläche beaufschlagt ist, dadurch gekennzeichnet, daß eine (5) der Anschlagflächen durch einen Rahmen (3) getragen ist, in dessen Inneres sich der Stab (1) erstreckt, wobei eines der Enden des Stabes (1) mit dem Rahmen (3) verbunden ist, sein anderes Ende die andere Anschlagfläche (4) trägt, wobei letztere gegenüber dem Rahmen (3) freiliegt und vollständig im Inneren des letzteren aufgenommen ist.

2. Gewichtssensor nach Anspruch 1, dadurch gekennzeichnet, daß der Rahmen (3) eine rechtwinklige Form hat.

3. Gewichtssensor nach einem der Ansprüche 1 oder 2, dadurch gekennzeichnet, daß sich der Stab (1) in einer Symmetrierichtung des Rahmens (3) erstreckt.

4. Gewichtssensor nach einem der Ansprüche 1 oder 2, dadurch gekennzeichnet, daß die gegenüber dem Rahmen (3) freie Anschlagfläche (4) zwei Teilstücke (4a, 4b) umfaßt, die sich in symmetrischer Weise zum Stab (1) ins Innere des Rahmens (3) erstrecken.

5. Gewichtssensor nach einem der Ansprüche 2 bis 4, dadurch gekennzeichnet, daß die gegenüber dem Rahmen (3) freie Anschlagfläche (4) ein zum Stab (1) senkrechtes und zum Teilstück (3a) des Rahmens (3) paralleles Teilstück (4c) umfaßt, mit welchem der Stab (1) verbunden ist, wobei das zum Stab (1) senkrechte Teilstück (4c) durch zwei parallele Teilstücke (4a, 4b) verlängert ist, die sich zum Teilstück (3a) des Rahmens (3) hin erstrecken.

6. Gewichtssensor nach einem der Ansprüche 4 oder 5, dadurch gekennzeichnet, daß die Länge der Teilstücke (4a, 4b) ein wenig kleiner als diejenige des Stabes (1) ist.

7. Gewichtssensor nach einem der Ansprüche 1 bis 6, dadurch gekennzeichnet, daß die Dehnungsmeßstreifen (2a) auf einem keramischen Träger angeordnet sind, der auf den Stab (1) sowie auf einen an eines der Enden des Stabes (1) angrenzenden Teil des Rahmens und auf einen an das andere Ende des Stabes (1) angrenzenden Teil der Anschlagfläche (4) geklebt ist.

8. Gewichtssensor nach einem der Ansprüche 1 bis 7, dadurch gekennzeichnet, daß dieser aus einem flachen Metallblock mit konstanter Dicke gebildet ist.

9. Gewichtssensor nach Anspruch 8, dadurch gekennzeichnet, daß dieser durch Schneiden einer Scheibe in einem Metallprofil (6) realisiert ist.

10. Wiegegerät mit wenigstens einem Gewichtssensor nach einem der Ansprüche 1 bis 9.

11. Wiegegerät mit wenigstens drei Gewichtssensoren nach einem der Ansprüche 1 bis 9, wobei die durch die Stäbe dieser Sensoren getragenen Dehnungsmeßstreifen mit einer gemeinsamen elektrischen Schaltung (8) verbunden sind.

12. Wiegegerät nach Anspruch 11, mit einer Platte (9) zur Aufnahme von zu messenden Gewichten (10), dadurch gekennzeichnet, daß die Platte (9) mit einer der Flächen des Sensors (7) durch Bauteile (11) in Kontakt steht, die an der gegenüber dem Rahmen (3) freien Anschlagfläche (4) anliegen, ohne den Rahmen (3) zu berühren.

13. Wiegegerät nach Anspruch 11, mit einer Platte (9) zum Aufnehmen von zu messenden Gewichten (10), dadurch gekennzeichnet, daß die Platte (9) mit einer der Flächen des Sensors (7) durch Bauteile (11) in Kontakt steht, welche an der durch den Rahmen (3) gebildeten Anschlagfläche anliegen, ohne die Anschlagfläche (4), die gegenüber dem Rahmen (3) frei ist, zu berühren.

14. Gerät nach einem der Ansprüche 12 oder 13, dadurch gekennzeichnet, daß die Anschlagfläche der Sensoren (7), welche derjenigen entgegen gesetzt liegt, die mit den mit der Platte (9) fest verbundenen Bauteilen (11) in Kontakt steht, mit einem Bauteil (11) in Kontakt steht, welches an der Oberfläche (13) zur Anlage kommt, auf welcher das Wiegegerät aufgestellt ist, wobei die Bauteile (11) mit dem entsprechenden Sensor (7) einen der Füße des Wiegegeräts bilden.

15. Wiegegerät nach Anspruch 14, dadurch gekennzeichnet, daß das Bauteil (12) mit einer der Anschlagflächen des Sensors (7) in Kontakt steht, ohne die andere Anschlagfläche zu berühren.

16. Wiegegerät nach einem der Ansprüche 14 oder 15, dadurch gekennzeichnet, daß das Bauteil (12) ein Elastomerblock ist.

17. Wiegegerät nach einem der Ansprüche 14 bis 16, dadurch gekennzeichnet, daß die Bauteile (11, 12), die mit einer jeweiligen Anschlagfläche der Sensoren in Kontakt stehen, an der Platte (9) und/oder an den Sensoren (7) durch Befestigungsmittel fixiert sind, die nicht durch die zu messenden Gewichte beansprucht werden und eine Unabhängigkeit der Sensoren gewähren.

## Claims

1. A weight sensor, inter alia for a weighing machine in the form of a flat block, comprising a test member in the form of a bar (1) bearing strain gauges (2); the said bar (1) undergoing flexure under the effect of the weight for measurement, the opposite ends of the said bar (1) each being connected to a support surface (4, 5) intended to be subjected to a force (F) in the opposite direction to a reaction force (F1) applied to the other support surface;
characterised in that one (5) of the support surfaces is carried by a frame (3) inside which the said bar (1) extends, one of the ends of said bar (1) being connected to the said frame (3), its other end bearing the other support surface (4), the latter being free with respect to the frame (3) and entirely contained inside the latter.

2. A weight sensor according to claim 1,
characterised in that the frame (3) is of rectangular shape.

3. A weight sensor according to claim 1 or 2,
characterised in that the bar (1) extends in a direction of symmetry of the frame (3).

4. A weight sensor according to claim 1 or 2,
characterised in that the support surface (4) free with respect to the frame (3) comprises two sections (4a, 4b) extending inside the frame (3) symmetrically with respect to the bar (1).

5. A weight sensor according to any one of claims 2 to 4, characterised in that the support surface (4) free with respect to the frame (3) comprises a section (4c) perpendicular to the bar (1) and parallel to the section (3a) of the frame (3) to which said bar (1) is connected, said section (4c) perpendicular to the bar (1) being continued in the form of two parallel sections (4a, 4b) extending towards the said section (3a) of the frame (3),

6. A sensor according to claim 4 or 5,
characterised in that the length of the sections (4a, 4b) is slightly less than that of the bar (1).

7. A sensor according to any one of claims 1 to 6,
characterised in that the strain gauges (2a) are disposed on a ceramic support stuck to the bar (1) and to a part of the said frame (3) adjacent one of the ends of the bar (1) and to a part of the said support surface (4) adjacent the said other end of the bar (1).

8. A weight sensor according to any one of claims 1 to 7, characterised in that it comprises a flat metal block of constant thickness.

9. A weight sensor according to claim 8,
characterised in that it is made by cutting a slice from a metal profile (6).

10. A weighing machine comprising at least one weight sensor according to any one of claims 1 to 9.

11. A weighing machine comprising at least three weight sensors according to any one of claims 1 to 9, the strain gauges carried by the bars of said sensors being connected to a common electronic circuit (8) .

12. A weighing machine according to claim 11, comprising a plate (9) for receiving the weight (10) for measurement, characterised in that the plate (9) is in contact with one of the surfaces of the sensors (7) via means (11) which bear on the support surface (4) free with respect to the frame (3), the frame (3) being left free.

13. A weighing machine according to claim 11, comprising a plate (9) for receiving the weight (10) for measurement, characterised in that the plate (9) is in contact with one of the surfaces of the sensors (7) via means (11) which bear on the support surface formed by the frame (3), while leaving free the said support surface (4) free with respect to the frame.

14. A machine according to claim 12 or 13,
characterised in that the support surface of the sensors (7) remote from the surface in contact with the said means (11) connected to the plate (9) is in contact with a means (12) adapted to bear on the surface (13) on which the weighing apparatus is placed, the said means (11) together with the corresponding sensor (7) forming one of the legs of the weighing apparatus.

15. A weighing machine according to claim 14,
characterised in that the said means (12) is in contact with one of the support surfaces of the sensor (7) while leaving the other support surface free.

16. A weighing machine according to claim 14 or 15,
characterised in that the said means (12) is an elastomeric block.

17. A weighing machine according to any one of claims 14 to 16, characterised in that the said means (11, 12) in contact with each of the support surfaces of the sensors are fixed to the plate (9) and/or to the sensors (7) by fixing means which are not subject to the weight for measurement and which ensure that the sensors are independent.
